Europäisches Patentamt

European Patent Office

Office européen des brevets

(11) Publication number: **0 329 048**

**A1**

## EUROPEAN PATENT APPLICATION

(21) Application number: 89102415.0

(51) Int. Cl.⁴: **B60R 13/06**

(22) Date of filing: 13.02.89

(30) Priority: 17.02.88 IT 6711988

(43) Date of publication of application:
23.08.89 Bulletin 89/34

(84) Designated Contracting States:
DE FR SE

(71) Applicant: GILARDINI S.p.A.
Divisione Componenti in Gomma Via Trinità
80
I-10026 Santena (Torino)(IT)

(72) Inventor: Tavella, Corrado
Via Delleani, 1
I-10026 Santena (Torino)(IT)
Inventor: Lingua, Silvano
Via Gozzano, 15
I-10026 Santena (Torino)(IT)

(74) Representative: Modiano, Guido et al
MODIANO, JOSIF, PISANTY & STAUB
Modiano & Associati Via Meravigli, 16
I-20123 Milan(IT)

(54) Guiding and retention gasket for sliding and retracting windows, particularly for motor vehicles, and process therefor.

(57) A guiding and retention gasket (10) for sliding and retracting windows, particularly for motor vehicles, comprising a covering (14) constituted by a strip of PTFE fluoridized resins instead of the known flocked layer; the strip is applied, with an adhesive layer possibly interposed, on at least part (110) of the sealing lips (11) of the gaskets which are to make contact with the pane.

EP 0 329 048 A1

Fig. 1

## GUIDING AND RETENTION GASKET FOR SLIDING AND RETRACTING WINDOWS, PARTICULARLY FOR MOTOR VEHICLES, AND PROCESS THEREFOR

The present invention relates to a guiding and retention gasket for sliding and retracting windows, particularly for motor vehicles, and to a process therefor.

As is known, the current sealing gaskets arranged along the contour of the windows of motor vehicles and intended to guide and retain the sliding glass panes are constituted by rubber profiled elements or channels with flocked sealing lips; said flocking is adapted to facilitate the sliding or respectively the entry and exit of the glass pane.

Such flocked gaskets, though suitable for the purpose and predominantly used by motor vehicle manufacturers, have many disadvantages.

The greatest of these disadvantages resides in that their manufacturing cycle is laborious and negatively affects the costs of the finished product. After the gasket extrusion and vulcanization steps it is in fact necessary to subject said gasket to the following further treatments: surface rasping, deposition of adhesive, application of an electrostatic field and flocking, heating in an electric-resistor oven.

Besides the laborious nature of the operating cycle and the consequent increase in production times, the above described succession of treatments considerably complicates the manufacturing equipment and entails problems in the maintenance and calibration of the various treatment stations which are not easy to solve.

Flocked gaskets of the above specified type furthermore have the disadvantage, from the point of view of their practical use, that they retain dust and foreign matter which tend to hinder the sliding of the glass pane, increasing the load on the movement elements, and to retain moisture, thereby, at low temperatures, ice crystals form, which also hinder said sliding.

The aim of the present invention is to eliminate these disadvantages, and within this general aim it has the following important particular objects:
- to provide a guiding and retention gasket for glass panes, allowing a radical simplification of the production processes while simultaneously having improved functional characteristics;
- to provide an improved gasket capable of significantly facilitating the sliding of glass panes both by virtue of a significant reduction of the friction coefficient and by virtue of the total absence of foreign matter, dust and the like; the improved gasket according to the present invention being, in particular, totally insensitive to temperatures and to the action of the weather;
- to provide a gasket having an improved overall functionality also in terms of air- and water-tightness.

In order to achieve this aim, these important objects and others which will become apparent from the following detailed description, the present invention relates to a gasket as defined in claim 1.

The invention further relates to a process for manufacturing gaskets according to the present invention, as defined in claim 4.

The characteristics and advantages will become apparent from the following detailed description and with reference to the accompanying drawings, given only by way of non-limitative example, wherein:

figure 1 is a perspective view of a portion of a channel-shaped gasket, also termed pane-guide, according to the present invention;

figure 2 is a sectional view of a similar so-called sliding gasket, known as a pane-scraper, also according to the present invention;

figure 3 is an axial schematic sectional view of an extrusion mouth for the continuous manufacture of the gaskets of figure 1 or figure 2.

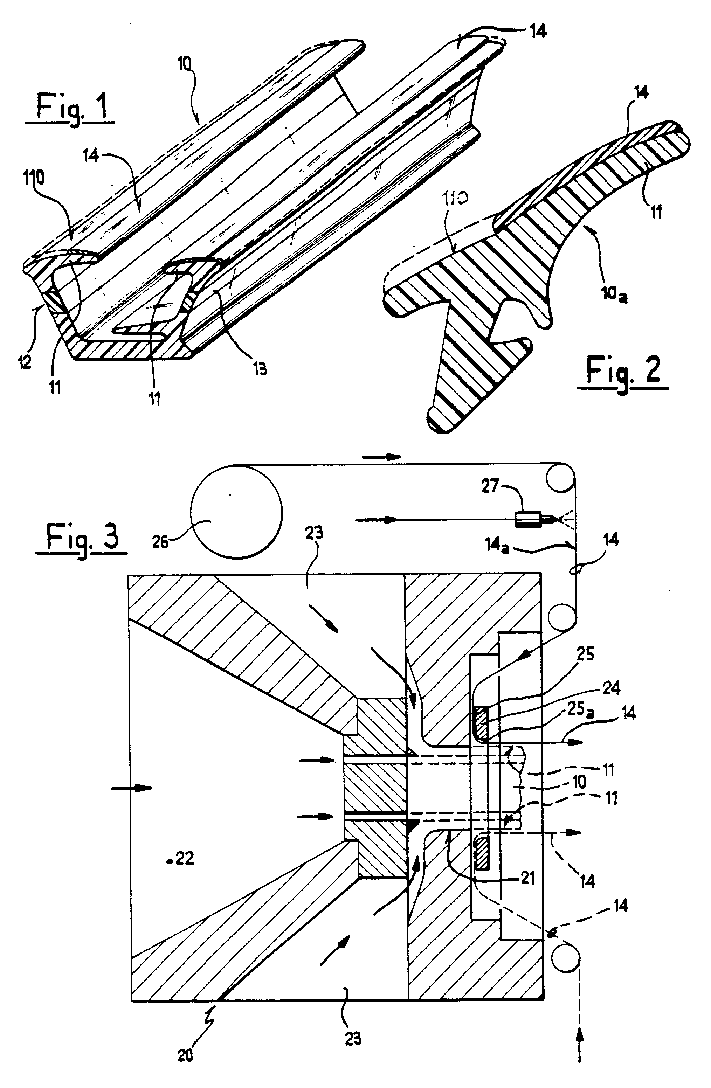

In figures 1 and 2, the reference numerals 10 and 10a generally indicate a pane-guiding gasket and respectively a glass pane-scraper gasket; the first gasket has a channel-like cross section, and both have sealing lips 11 intended to slide or make contact with the glass pane. Said gaskets are arranged on the upper ledger and on the uprights which surround the opening of the window of a motor vehicle and respectively at the base of said window.

In the illustrated example, the gasket 10 is of the two-mix type, with inserts 12 and 13 of hard rubber at the side walls of the channel.

According to the present invention, a covering 14 is applied on the surface 110 of the sealing lips instead of the conventional flocking; said covering is constituted by a continuous strip of material chosen among PTFE fluoridized resin-based materials, for example a strip of the material known by the trade-name "Teflon", with a thickness preferably comprised between 0.08 and 0.6 mm and a width sufficient to cover at least all the portion of the lip which is to make contact with the glass pane.

The strip 14 is applied to the gasket 10-10a immediately after the known extrusion step, after the application of a solution of an adhesive product, for example the adhesive known by the trade-name "Chemosil 221". For this purpose, the extrusion head 20 is modified as illustrated in figure 3, in which the reference numeral 21 indicates the extrusion nozzle adapted to manufacture a two-mix gasket 10; the head 20 has an axial channel 22 for feeding the hard component and radial channels 23 for feeding the soft component which, in the illustrated examples, is intended to form the lips 11. The modification consists in applying a front support 24 to the head 20, said support surrounding the outlet of the nozzle 21 and having radial channels 25 connected to axial openings 25a which are connected and tangent to the surfaces of the gaskets to be covered by the strip 14. The strip 14 unrolls from a roll 26 and is continuously fed in the channels 25; the layer of adhesive is deposited on the strip's surface 14a intended to adhere to the gasket, for example by spraying with appropriate nozzles 27.

As clearly illustrated in the figure, the channels 25 guide the adhesive-coated strip 14 to contact the gasket, so that said gasket is completely formed when it exits from the head 20.

The above described forming step is followed by the per se known steps of vulcanization and of treatment in a hot-air oven; the finished product is obtained at the end of said steps.

The embodiments and the details of execution of the product and respectively of the process may be extensively variated, with respect to what is described and illustrated only by way of non-limitative example, without changing the concept of the invention and without thereby abandoning the scope of said invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A guiding and retention gasket for sliding and retracting window panes, particularly for motor vehicles, characterized by a covering (14) comprising a strip of PTFE fluoridized resins; said strip being applied on at least part (110) of the sealing lips (11) of the gaskets (10, 10a) which are to make contact with the glass pane.

2. A gasket according to claim 1, wherein said strip (14) is made of the material known by the trade-name "Teflon".

3. A gasket according to claims 1 and 2, wherein the thickness of said strip (14) is comprised between 0,08 and 0,6 mm.

4. A process for manufacturing gaskets according to claims 1 to 3, characterized in that it consists in applying the strip or strips of fluoridized resin to the gasket immediately after the end of the extrusion step, guiding the strips within a support which is frontally applied on the extrusion head and surrounds the extrusion nozzle; said support having radial channels which end with axial openings connected and tangent to each surface of the extruded gasket which is intended to receive said strip.

5. A process according to claim 4, wherein the strip of fluoridized resin is unrolled from a roll and is continuously fed into said channels of the support of the extrusion head; an adhesive layer being deposited on the face of said strip which is to adhere to said gasket.

6. A process according to claims 4 and 5, characterized in that it comprises, at the end of the gasket extrusion and the strip application steps, successive steps of vulcanizing and heating said gasket in a hot-air oven.

EP 0 329 048 A1

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 191 381 (CONTINENTAL) * Page 2, lines 22-30; figure 1 * | 1,2 | B 60 R 13/06 |
| Y | | 4-6 | |
| Y | GB-A-2 074 092 (SCHIESSER) * Page 2, lines 50-70; page 3, lines 19-33; figures 1,2 * | 4-6 | |
| A | GB-A-2 126 274 (METZELER) * Page 1, line 114 - page 2, line 51; figure 2 * | 4 | |

TECHNICAL FIELDS SEARCHED (Int. Cl.4)

B 60 J
B 60 R
E 06 B

The present search report has been drawn up for all claims

| Place of search | Date of completion of the search | Examiner |
|---|---|---|
| THE HAGUE | 29-05-1989 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)